Europäisches Patentamt

European Patent Office

Office européen des brevets

(19)

(11) Veröffentlichungsnummer: **0 087 560**
**B1**

(12) # EUROPÄISCHE PATENTSCHRIFT

(45) Veröffentlichungstag der Patentschrift:
15.11.89

(51) Int. Cl.⁴: **B 41 J 9/14**

(21) Anmeldenummer: **83100290.2**

(22) Anmeldetag: **14.01.83**

(54) **Steuerung zur Begrenzung der Anzahl gleichzeitig betätigter Druckhämmer.**

(30) Priorität: **01.03.82 US 353287**

(43) Veröffentlichungstag der Anmeldung:
**07.09.83 Patentblatt 83/36**

(45) Bekanntmachung des Hinweises auf die Patenterteilung:
**15.11.89 Patentblatt 89/46**

(84) Benannte Vertragsstaaten:
**BE CH DE FR GB IT LI NL**

(56) Entgegenhaltungen:
**US-A-3 885 469**
**US-A-3 944 741**
**US-A-4 236 447**
**US-A-4 273 041**

(73) Patentinhaber: **International Business Machines Corporation, Old Orchard Road, Armonk, N.Y. 10504 (US)**

(72) Erfinder: **Carrington, James Edward, 309 Parkwood Road, Vestal NY 13850 (US)**
Erfinder: **Westcott, Gerald Ralph, R.D. Nr. 2 Edison Road, Endicott NY 13760 (US)**

(74) Vertreter: **Blutke, Klaus, Dipl.- Ing., Schönaicher Strasse 220, D-7030 Böblingen (DE)**

EP 0 087 560 B1

LIBER, STOCKHOLM 1989

## Beschreibung

Die Erfindung betrifft eine Steuerung zur Begrenzung der Anzahl gleichzeitig betätigter Druckhämmer von Zeilendruckern.

Zeilendrucker arbeiten durch beliebige Auswahl und das Feuern einzelner Druckhämmer in einer Hammerreihe (Druckhammerbank), die einen scharfen Aufschlag zwischen einem Druckmedium und den Typenzeichen auf einem sich kontinuierlich bewegenden Typenträger bewirken. Der Typenträger kann ein umlaufendes flexibles Typenband, eine Kette oder eine rotierende Trommel sein. In jedem Druckzyklus kann eine unterschiedliche Zahl von Druckhämmern eingeschaltet werden, abhängig von den in einer gegebenen Zeile aufzuzeichnenden Daten. Die Rate eingeschalteter Hämmer hängt von der Verteilung der Zeichen auf dem Typenträger in der Druckzeile ab. Die Steuerung zur Begrenzung der Höchstzahl von Hämmern, die zu einem gegebenen Zeitpunkt im Laufe des Druckzeilenzyklus eingeschaltet werden können, ist bei Zeilendruckern problematisch. Das Problem entsteht aus der Tatsache, daß gesteuerte Hämmer für einen Zeitraum von mehreren Druckzyklen (Scans) eines Druckzeilenzyklus eingeschaltet bleiben, während andere Druckhämmer gefeuert und abgeschaltet werden. Steuerschemata zur Begrenzung der Anzahl eingeschalteter Hämmer, die vom Erfassen und Zählen der tatsächlichen Hammerfeuerimpulse im Vergleich mit Rückstellimpulsen oder Pulsen eines Pulsratengenerators abhängen, arbeiten nicht zufriedenstellend, wie es zu beobachten ist besonders bei sehr schnellen Druckern und in den Fällen, in denen die Steuerungen Verzögerungs- oder andere Schaltungen zur Kompensation der Flugzeitunterschiede der einzelnen Hämmer benutzen. Begrenzungssteuerungen, die Hammertreiberimpulse und den Takt oder die Impulsrate für die Begrenzungserkennung und die Steuerung zählen, verlangen ein anderes Schaltungsdesign, wenn der Drucker mit verschiedenen Geschwindigkeiten arbeiten soll. Wenn das Feuern einzelner Druckhämmer unterschiedlich verzögert wird, können Schwierigkeiten in der Schaltung zum Erfassen des Abschaltzeitpunktes der Hämmer auftreten, und konventionelle Zähler können gleichzeitig oder annähernd gleichzeitig auftretende Treiberimpulse und Rückstellimpulse nicht erkennen.

In der US-Patentschrift 4 236 447 vom 2. Dezember 1980 wird eine Druckspalten-Anzahlbegrenzungsanordnung offenbart, die einen umkehrbaren Zähler verwendet, in dem der Zählerstand durch Hammertreibersignale erhöht und aufgrund von Rückstellsignalen erniedrigt wird. Wenn der Zähler einen vorgegebenen Wert n erreicht, wird ein Sperrsignal erzeugt, das die Erzeugung weiterer Treiber- und Rückstellsignale blockiert. In einem zweiten Ausführungsbeispiel ist der umkehrbare Zähler so geschaltet, daß sein Zählerstand durch Impulse vom Hammertreiber beim Abschalten heruntergesetzt wird.

In der US-Patentschrift 3 944 741 vom 16. März 1976 wird ein Druckratensteuersystem beschrieben, das mit einem Ein-Richtungszähler arbeitet und die Anzahl von über einem kurzen Steuerintervall aufgezeichneten Zeichen zusammen mit einem umkehrbaren Zähler zur Steuerung der Höchstzahl von über einem längeren Steuerintervall aufgezeichneten Zeichen verwendet. Beide Zähler zählen Impulse von einem Druckdaten/Typendatenvergleicher, der so geschaltet ist, daß er eine Hammertreiberschaltung aktiviert. Der Ein-Richtungszähler wird am Ende eines jeden kurzen Steuerintervalles zurückgestellt. Der umkehrbare Zähler ist über einen Schalter mit einem von zwei Ratenpulsgeneratoren verbunden, um vom Zählerstand subtrahieren zu können von der der Zahl der Treiberimpulse, abhängig von den Schaltgeschwindigkeiten, mit denen der Drucker drucken soll.

Im IBM Technical Disclosure Bulletin, vol. 20, Nr. 4, September 1977, Seiten 13 - 19 und folgende wird ein System zur Steuerung der Höchstzahl von in einem Zeitraum gefeuerten Druckhämmern beschrieben, das mit einem Aufwärts/Abwärtszähler arbeitet und durch Taktimpulse herunter- sowie durch Hammerfeuerimpulse heraufgesetzt wird. Eine Höchstzahl im Zähler wird decodiert und blockiert das Weiterleiten von Taktimpulsen an den Zähler. Die Zahl Null im Zähler wird decodiert und blockiert das Weiterleiten von Treiberimpulsen an den Zähler.

In der US-Patentschrift 3 885 469 vom 27 Mai 1975 wird ein Kompensationssystem für die Hammermagnetbetriebszeit beschrieben, das mit mehreren Zählern arbeitet und aus der Druckinformation im Speicher die Anzahl der Hämmer bestimmt, die während eines Druckintervalles eingeschaltet werden, und das aus dieser Anzahl die resultierende Änderung in der Treiberspannung vorhersagt und die Dauer des Anlegens der Treiberspannung an die Hämmer regelt, um den Aufschlagaugenblick zu steuern.

In der US-Patentschrift 4 273 041 vom 16. Juni 1981 wird eine Begrenzungssteuerung beschrieben, in der die Anzahl und die Reihenfolge der zu feuernden Druckhämmer in jeder Unterabtastung (Subscan) vorberechnet und in einer Druckpositionen-Feuertabelle eingeordnet wird. Die Tabelle enthält eine Druckpositions-Zählinformation, die die Anzahl der in jeder Unterabtastung zu feuernden Druckhämmer darstellt. Beim Aufbau dieser Druckpositions-Feuertabelle wird die Druckpositionen-Zahl in der Tabelle mit einer Höchstzahl verglichen. Wenn beide Zahlen übereinstimmen, wird eine weitere Druckposition nicht mehr in der Tabelle gespeichert. Während des Druckens erfolgt keine Bestimmung, um die Anzahl der eingeschalteten Hämmer zu begrenzen.

Es ist Aufgabe der Erfindung, zur Erzielung hoher Druckleistungen die Begrenzungsbestimmung ausgewählter Druckhämmer während des aktuellen Druckvorganges vorzunehmen. Diese Aufgabe der Erfindung wird durch die im kennzeichnenden Teil des Anspruches 1 genannten Maßnahmen gelöst. Vorteilhafte Weiterbildungen der Erfindung sind den Unteransprüchen zu entnehmen.

Bei der erfindungsgemäßen Steuerung zur Begrenzung der Anzahl der in einem Steuerintervall gleichzeitig zu betätigenden Druckhämmer werden sowohl die betätigten Hämmer vorausgehender Steuerintervalle, welche Bruchteile der Flugzeit eines Hammers sind, als auch im aktuellen Steuerintervall ausgewählte Druckhämmer berücksichtigt. Auf diese Weise wird die teilweise während des aktuellen Druckintervalles noch andauernde Erregung von Druckhämmern aus vorangegangenen Druckintervallen mit erfaßt.

Bei der erfindungsgemäßen Steuerung läßt sich leicht durch Programmierung eines Mikroprozessors eine Anpassung an verschiedene Druckgeschwindigkeiten oder andere Parameter erreichen, ohne daß die Steuerschaltung neu entwickelt oder ausgetauscht werden muß.

Die Begrenzungssteuerung gestattet weiterhin eine Veränderung der Obergrenze ohne Schaltkreisänderung zur Anpassung an wechselnde Betriebsbedingungen oder Erfordernisse.

Grundsätzlich erfordert die Erfindung einen Zähler und einen Speicher. Der rückstellbare, in eine Richtung zählende Zähler zählt Vergleichssignale von einer Vergleicherschaltung, die das Zusammentreffen der Druckdaten und der Typenpositionsdaten synchron mit der Bewegung des Typenträgers feststellt. Der Zähler hält einen laufenden Zählerstand der Anzahl von Vergleichersignalen für ein Steuerintervall, das eine Funktion des Druckintervalles des Betriebes eines Druckzeilenzyklus ist. Der Speicher speichert die im Zähler registrierte Vergleichssignalzahl am Ende eines jeden von mehreren Steuerintervallen. Durch erfindungsgemäße Einrichtungen wird die weitere Wahl von Druckhämmern verhindert. Aus der Kombination des laufenden Zählerstandes im Vergleicherzähler und der im Speicher gespeicherten Zähldaten wird vorher gesagt, wann die Anzahl der eingeschalteten Hämmer genauso groß ist wie eine vorgegebene höchste Zahl. Außerdem sind Einrichtungen zum Fortschreiben der Zähldaten im Speicher durch Übertragen der am Ende eines jeden Zählintervalles registrierten Zahl in den Speicher vom Zähler vorgesehen.

Ein Addierer liefert durch Zusammenfassen der im Zähler registrierten Zähldaten mit den Zähldaten im Speicher eine Gesamtsumme. Die Gesamtsumme wird in einem Register gespeichert und durch einen Vergleicher mit einer in einem zweiten programmierbaren Register gespeicherten Höchstzahl verglichen. Wenn die Gesamtsumme mit der Höchstzahl übereinstimmt, erzeugt der Vergleicher ein Steuersignal an seinem Ausgangsanschluß zur Vergleicherschaltung der Druckersteuerung, um weitere Vergleiche der Druckerdaten und der Typenpositionsdaten zu verhindern. Die erfindungsgemäße Einrichtung enthält weiterhin eine Anordnung zur Fortschreibung der im Speicher gespeicherten Zähldaten am Ende eines jeden Steuerintervalles. Die Zahl im Zähler wird in den Speicher geschrieben und ersetzt die ältesten dort gespeicherten Zähldaten. Die fortgeschriebenen Zähldaten werden dann auf den Addierer ausgelesen, der eine Zwischensumme erzeugt. Die Zwischensumme wird in einem Zwischensummenregister gespeichert und später vom Addierer zur Berechnung der Gesamtsumme für jede Vergleichssignalenzahl im Zähler benutzt. Bei dieser Vorrichtung läßt sich die Höchstzahl leicht ändern durch Eingabe der neuen Zahl in das Höchstzahlenregister. Außerdem kann die im Speicher gespeicherte Zahl abhängig von der Betriebszeit der einzelnen Druckhämmer geändert werden. So läßt sich für verschiedene Druckhämmer dieselbe Grundsteueranordnung verwenden, ohne daß die Grundsteuerschaltung neu entworfen werden muß.

Ein Ausführungsbeispiel der Erfindung ist in den Zeichnungen dargestellt und wird im folgenden näher beschrieben. Es zeigen:

Fig. 1    ein Blockdiagramm mit dem erfindungsgemäßen Druckersteuersystem

Fig. 2    ein Blockdiagramm mit der Anordnung zur Druckhammeranzahl-Begrenzungssteuerung nach Fig. 1

Fig. 3    eine Schaltung mit weiteren Einzelheiten zu einem Teil des Blockdiagrammes nach Fig. 2

Fig. 4    eine Schaltung mit weiteren Einzelheiten zu einem anderen Teil des Blockdiagrammes nach Fig. 2

Fig. 5    ein Zeitdiagramm zur Erklärung der zeitlichen Beziehungen zwischen der Steuerung der Hammerbegrenzung und der Druckoperation

Fig. 6    ein Zeitdiagramm zur Darstellung des Vergleichszyklus und

Fig. 7    ein Zeitdiagramm für den Fortschreibezyklus.

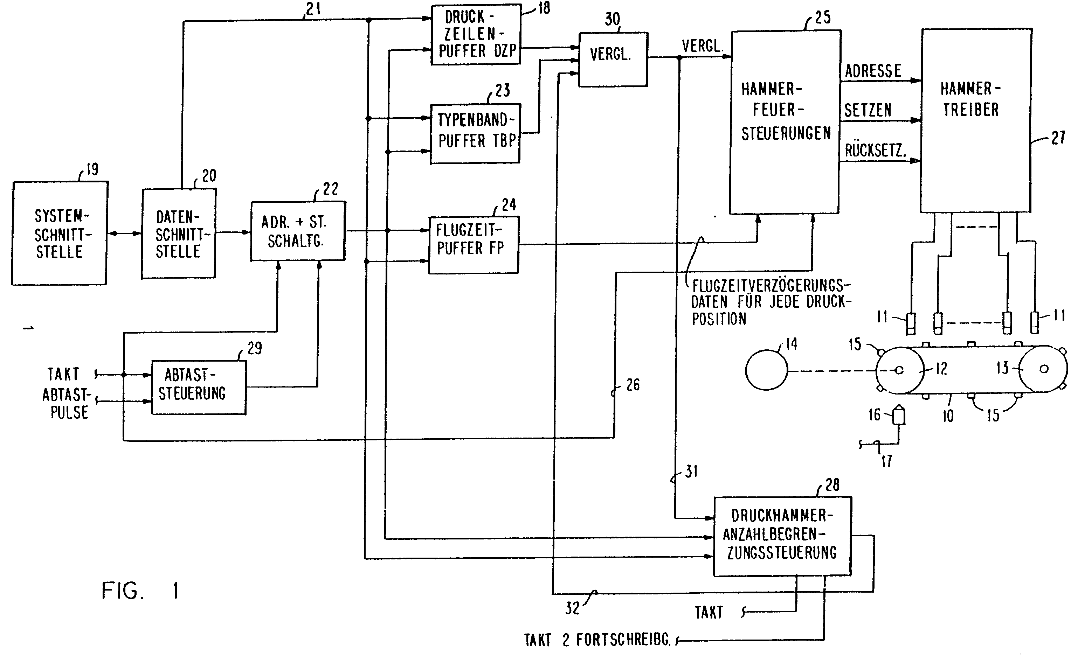

Wie aus Fig. 1 zu ersehen ist, enthält eine zur Anwendung der Erfindung geeignete Druckvorrichtung ein endloses Typenband 10 und elektromagnetisch betätigte Druckhämmer 11, die in einer Reihe (Druckhammerbank) parallel zu einem geraden Teil des Bandes 10 angeordnet sind. Das Typenband 10 ist auf drehbaren Bandrollen 12 und 13 geführt, von denen eine mit einem Antriebsmotor 14 verbunden ist und das Typenband 10 in einer oder mehreren Geschwindigkeiten bewegt, die während des Druckens konstant gehalten wird. Auf dem Typenband 10 sind z. B. herausgeätzte Typenelemente 15 in gleichmäßigem Abstand angeordnet, der sich jedoch vom gegenseitigen Abstand (der Teilung) der Druckhämmer 11 unterscheidet. Durch die Teilungsunterschiede werden während der Bandbewegung entsprechend einer Vielzahl wiederkehrender Abtast/Unterabtastfolgen (scans /subscans) Untergruppen von Typenelementen 15 auf Untergruppen von Druckhämmern 11 ausgerichtet.

Das Prinzip der Abtastung/Unterabtastung ist allgemein bekannt und wird in der US-Patentschrift 4 275 653 näher beschrieben. In einer besonderen Ausführung für die Anwendung der Erfindung kann die Druckvorrichtung 168 Druckhämmer für 168 Druckpositionen (10 pro 25,4 mm (Zoll)) in einer Druckzeile haben. Das Typenband 10 kann 480 Typenelemente 15 mit einem Abstand von 3,3782 mm (0,133 Zoll) entsprechend 4 Unterabtastungen pro Druckabtastung aufweisen. Bei dieser Anordnung würde ein vollständiger Umlauf des Typenbandes 10 in 480 Abtastungen (scans) unterteilt. Das Typenband 10 weist Zeitmarkierungen auf (nicht dargestellt), die auch eingraviert sein können und von einem Wandler 16 abgetastet werden. Der Übertrager erzeugt Abtastimpulse auf der Leitung 17, die zur zeitlich synchronen Steuerung des Betriebes der Druckersteuerung mit der Bewegung des Typenbandes 10 und dem endgültigen Feuern der Druckhämmer 11 benutzt werden. Die Abtastimpulse werden vom Wandler 16 vorzugsweise in einer Rate von einem Impuls pro Druckabtastung erzeugt. Diese Impulse können nachträglich unterteilt werden in Unterabtastimpulse, die gleich der Anzahl von Unterabtastausrichtungen der Typenelemente 15 auf die Druckhämmer 11 sind.

In der Druckersteuerung gemäß Fig. 1 ist der Druckzeilenpuffer DZP 18 ein Lese/Schreibspeicher, der eine Zeile zu druckender Daten speichert, die auf der Datensammelleitung 21 von einem System-Interface 19 für die Drucker-Steuereinheit über die Datenschnittstelle 20 empfangen wurden. Die Datenübertragung kann in jeder beliebigen Form erfolgen, wird jedoch vorzugsweise wortseriell und bitparallel vorgenommen. Die zu druckenden Daten werden im DZP 18 durch die Adressier- und Steuerschaltung 22 in der Reihenfolge angeordnet, in der sie in einer Datenzeile auszudrucken sind.

Der Typenbandpuffer TBP 23 ist ebenfalls ein Lese/Schreibspeicher, in dem ein Abbild der druckbaren Zeichen des Typenbandes 10 in genau der gleichen Anordnung gespeichert ist, wie die Typenelemente 15 auf dem Typenband 10 erscheinen. Der Flugzeitpuffer FP 24 speichert Verzögerungswerte, die von den Hammerfeuersteuerungen 25 in Verbindung mit Taktimpulsen auf der Taktleitung 26 zum Einschalten und Rückstellen der adressierten Hammertreiber 27 benutzt werden, um die unterschiedlichen Flugzeiten der Hämmer 11 zu kompensieren und um die an die Elektromagnete, welche den Hammeraufschlag bedingen, gelieferte Energie zu steuern. Weitere Einzelheiten der Arbeitsweise der Hammerfeuersteuerungen 25 sind an anderer Stelle beschrieben.

Angaben zur Begrenzung der Anzahl gleichzeitig eingeschalteter Druckhämmer 11 werden über die Datensammelleitung 21 von der Datenschnittstelle 20 unter Steuerung der Adressier- und Steuerschaltung 22 an die Druckhammeranzahl-Begrenzungssteuerung 28 gegeben. Die Abtaststeuerung 29 empfängt Abtastimpulse vom Wandler 16 über die Leitung 17 und Taktsignale zur Steuerung des Betriebes der Adressier- und Steuerschaltung 22, um Zeichendaten vom DZP 18 und vom TBP 23 für eine Unterabtastung auszulesen. Der Vergleicher 30 reagiert auf den Eingang der Druckzeichendaten vom DZP 18 und der Typenelementendaten vom TBP 23 und erzeugt ein einleitendes Feuersignal, wenn die Zeichendaten an der Druckposition im DZP 18 den auf diese Druckposition ausgerichteten Typenelementendaten entsprechen, und aktiviert so die Hammerfeuersteuerungen 25, die wiederum den gewählten Hammertreiber 27 nach einer entsprechenden Verzögerung für diesen Hammer entsprechend den vom FP 24 gelieferten Verzögerungsdaten einschalten. Die Hammerfeuersteuerungen 25 geben ein Einschaltsignal an den betreffenden adressierten Hammertreiber 27 und schalten so den zugehörigen Druckhammer 11 ein. Der Ausgang des Vergleichers 30 ist über die Vergleicher-Ausgangsleitung 31 mit der Druckhammeranzahl-Begrenzungssteuerung 28 verbunden, die über eine Sperrsignalleitung 32 ein Sperrsignal auf den Vergleicher 30 zurückkoppelt. Die Druckhammeranzahl-Begrenzungssteuerung 28 erzeugt dieses Sperrsignal, wenn die Anzahl von Vergleichersignalen auf der Vergleicher-Ausgangsleitung 31 in einem Zeitintervall gleich der Höchstzahl von Druckhämmern ist, die von den von der Systemschnittstelle 19 auf der Datensammelleitung 21 gelieferten Hammerbegrenzungsdaten angegeben ist.

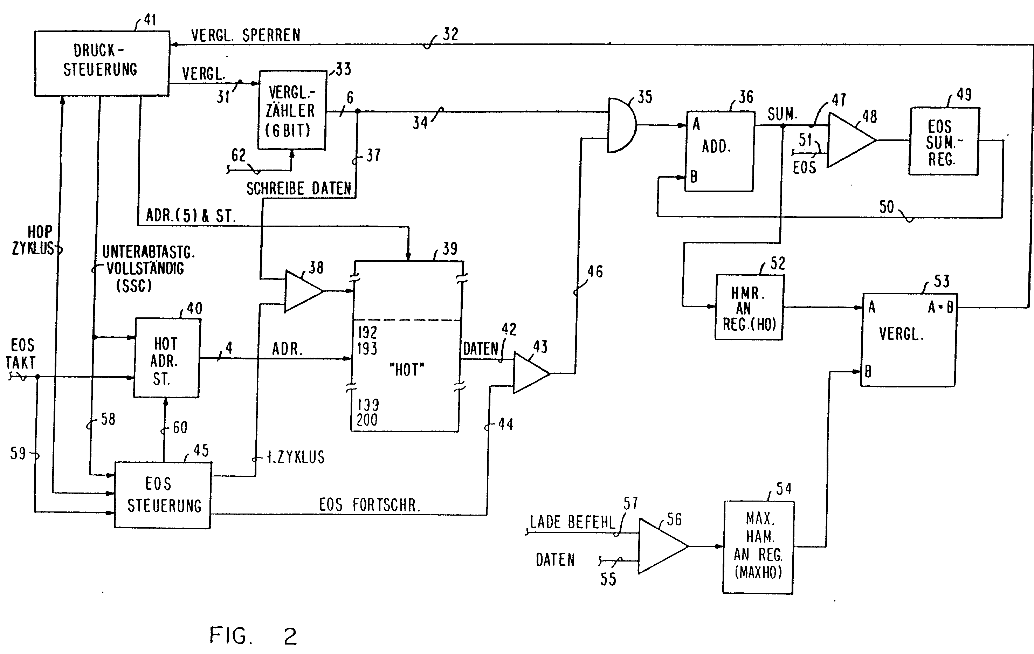

In einem bevorzugten Ausführungsbeispiel der Druckhammeranzahl-Begrenzungssteuerung 28, wie es in Fig. 2 dargestellt ist, empfängt der Vergleicherzähler 33 Vergleichssignale auf der Vergleicher-Ausgangsleitung 31 vom Vergleicher 30 der Drucksteuerung 41. Der Vergleicherzähler 33, vorzugsweise ein 6-bit-Zähler, ist mit einem Ausgang über die Sammelleitung 34 und das ODER-Glied 35 an dem A-Eingang des Addierers 36 angeschlossen. Der Ausgang des Vergleicherzählers 33 ist außerdem über die Sammelleitung 37 und das UND-Glied 38 mit dem Pufferspeicher 39 verbunden. Der Pufferspeicher 39 ist ein Speicher mit wahlfreiem Zugriff; er weist z. B. die Speicherstellen 192 - 200 auf, die eine Hammereinschalttabelle (HOT) bilden, in der mehrere durch den Vergleicherzähler 33 registrierte Zahlen für mehrere aufeinanderfolgende Steuerintervalle gespeichert werden. Im Ausführungsbeispiel der Erfindung speichert die Hammereinschalttabelle HOT die Vergleicher-Zahlen für mehrere Steuerintervalle, deren zusammengefaßte Dauer im wesentlichen genauso groß ist wie die effektive Flugzeit oder Betriebszeit der Druckhämmer, so daß jedes Steuerintervall ein Bruchteil der Flugzeit ist. Das Steuerintervall kann auch eine Funktion des Druckintervalles sein. Der HOT-Teil des Pufferspeichers 39 wird für Lese- und Schreiboperationen adressiert durch die HOT-Adressiersteuerungen 40. Aus dem HOT-Teil des Pufferspeichers 39 gelesene Zahlendaten erscheinen auf der Datensammelleitung 42. Diese Daten werden durch das UND-Glied 43 durch einen Abtastende-Fortschreibepuls auf der Leitung 44 von einer Abtastende-(EOS)-Steuerung 45 geleitet. HOT-Werte, die über das UND-Glied 43 geleitet werden, werden über die Sammelleitung 46 und das ODER-Glied 46 an den A-Eingang des Addierers 36 geleitet.

Die vom Addierer gebildete Summe aus den aus dem HOT gelesenen Zähldaten wird über die Sammelleitung 47 durch das UND-Glied 48 an das EOS-Summenregister 49 geleitet.

Das Summenregister 49 steht über eine Rückkopplungsleitung 50 mit dem B-Eingang des Addierers 36 in Verbindung. Ein EOS-Steuerimpuls auf der Leitung 51 leitet die Daten auf der Sammelleitung 47 während des Fortschreibezyklus der Druckhammeranzahl-Begrenzungssteuerung an das EOS-Summenregister.

Während des Vorhersagezyklus bildet der Addierer 36 Gesamtsummen aus dem Zählwert vom Vergleicherzähler 33 an seinem A-Eingang und der Summe im Register 49 an seinem B-Eingang und gibt diese Gesamtsumme dann auf die Sammelleitung 47 zur Speicherung im Hammer-an-(HO)-Register 52. Der A-Eingang des Grenzwertvergleichers 53 ist an das HO-Register 52 und der B-Eingang an ein Maximal-Hammer-an-Register (MAX HO) 54 angeschlossen. Die Höchstzahl oder Maximalzahl wird auf die Sammelleitung 55 gegeben. Ein Ladebefehlssignal auf der Ladebefehlssignalleitung 57 leitet diese Höchstzahldaten über das UND-Glied 56 an das MAX HO-Register 54. Der Grenzwertvergleicher 53 erzeugt ein Vergleichersperrsignal auf der Rücksperrsignalleitung 32, wenn die Daten im HO-Register 52 und im MAX HO-Register 54 gleich sind. Dieses Vergleichersperrsignal auf der Sperrsignalleitung 32 zur Drucksteuerung 41 geleitet, verhindert die weitere Erzeugung von Vergleichssignalen auf der zum Vergleicherzähler 33 führenden Vergleicher-Ausgangsleitung 31.

Die erfindungsgemäße Druckhammeranzahl-Begrenzungssteuerung hat zwei Operationszyklen oder -phasen, nämlich den Vorhersage-oder Vergleichszyklus und den Fortschreibezyklus. Im Vergleichszyklus (gemäß Fig. 1 und 2) hält der Vergleichszähler 33 einen laufenden Zählwert der Vergleichersignale, die vom Vergleicher 30 durch Zusammentreffen der Abtastungen von DZP 18 und TBP 23 während der Folge von Unterabtastfunktionen des Druckzeilenzyklus erzeugt werden. Bei jeder Erzeugung eines Vergleichssignals summiert der Addierer 36 an seinem A-Eingang die im Zähler 33 registrierte Menge zu der am Eingang B der Rückkopplungsleitung 50 vom EOS-Summenregister 49 kommende Menge. Im Vergleichszyklus ist die EOS-Steuerimpulsleitung 51 inaktiv, so daß der Gesamtsummenausgang vom Addierer 36 auf der Sammelleitung 47 im HO-Register 52 gespeichert wird zum Vergleich mit dem Inhalt des MAX HO-Registers 54 im Grenzwertvergleicher 53.

Bei Beginn des Druckzeilenzyklus sind keine Hämmer eingeschaltet, so daß die Summe im EOS-Summenregister 49 Null ist. Somit ist die am Anfang über die Sammelleitung 47 in das HO-Register 52 gesetzte Summe gleich der Zahl im Vergleicherzähler 33. Nach einem vorgegebenen Steuerintervall, das eine Funktion der Druckunterabtastungen ist, wird ein EOS-Puls von einem externen Taktgeber über die EOS-Taktleitung 59 an die EOS-Steuerung 45 gegeben. Die Frequenz der Steuerintervallpulse ist auf die Druckunterabtastungen bezogen, sie kann jedoch mehr oder weniger willkürlich und unabhängig vom Druckintervall sein. Sie ist vorzugsweise ein Bruchteil der Betriebszeit der Druckhämmer. Zur praktischen Anwendung der vorliegenden Erfindung ist ein Steuerintervallpuls vorzugsweise mit einer Periode vorgesehen, die direkt auf die effektive Flugzeit der Druckhämmer bezogen und ein Bruchteil dieser Zeit ist.

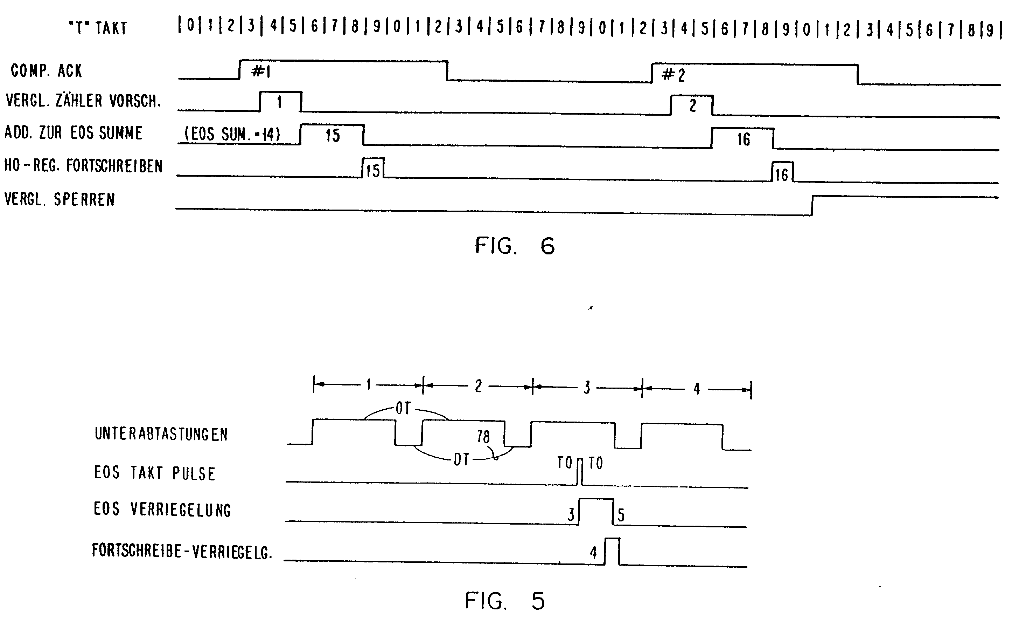

Der Vergleichszyklus wird beendet und der Fortschreibezyklus beginnt durch das Anlegen des EOS-Steuerintervalltaktimpulses auf die Leitung 59 zusammen mit einem Unterabtastendimpuls (SSC) von der Druckersteuerung 41, der über die Leitung 58 an die EOS-Steuerung 45 gegeben wird. Ein geeignetes SSC-Signal kann als Teil der Operation der DZP-Abfrageschaltung erzeugt werden, die aus einem Unterabtastringzähler (nicht dargestellt) bestehen kann, der eine Verriegelung in seinem letzten Zählzustand für eine spezifizierte Zeit auf eine noch näher zu beschreibende Art einschalten kann. Der Fortschreibezyklus beginnt und wird während einer Totzeit DT 78 (siehe Fig. 5) zwischen zwei Unterabtastungen weitergeführt. Damit ist sichergestellt, daß kein Hammer ausgewählt wird, d. h. keine Vergleichssignale erzeugt werden, da keine Daten von dem DZP 18 und TBP 23 an den Vergleicher 30 geliefert werden.

Jeder Fortschreibezyklus der Druckhammeranzahl-Begrenzungssteuerung 28 umfaßt eine Schreiboperation und eine anschließende Leseoperation. In der Schreiboperation wird die HOT-Adressiersteuerung 40 so betrieben, daß sie auf eine Speicherstelle der HOT zeigt, und die im Vergleicherzähler 33 und auf der Sammelleitung 37 registrierte Zahl wird in diese Speicherstelle geschrieben. Am Ende des ersten Steuerintervalles eines Druckzeilenzyklus wird die erste Speicherstelle, z. B. 192, durch einen ersten Zyklusimpuls auf der Zyklusimpulsleitung 61, die zum UND-Glied 38 führt, gewählt und der Inhalt des Vergleicherzählers 33 in diese Stelle geschrieben. Der Vergleicherzähler 33 kann dann durch einen Impuls auf der Leitung 62 auf Null gelöscht werden. Unmittelbar nach dem Schreibzyklus findet eine Leseoperation statt. In der Leseoperation werden alle N Speicherstellen der HOT sequentiell durch die Adressiersteuerung 40 adressiert und das EOS-Fortschreibesignal von der EOS-Steuerung 45 auf der Leitung 44 leitet die aus der HOT gelesenen Daten durch das UND-Glied 43 und das ODER-Glied 45 an den A-Eingang des Addierers 36. Beim ersten Auslesen am Ende des ersten Steuerintervalles eines Druckzeilenzyklus beginnt der Auslesevorgang und endet an der zweiten Speicherstelle, z. B. der Stelle 193. Im zweiten Fortschreibezyklus wird die im Vergleicherzähler 33 registrierte Zahl in die zweite Speicherposition, d. h. in die Position 193 geschrieben und das Lesen beginnt und endet an der dritten Position 194 in Vorbereitung der Schreiboperation für die dritte Zahl am Ende des dritten Fortschreibezyklus. Dieselbe Schreib /Lesefolge wird in allen nachfolgenden Fortschreibezyklen des Druckzeilenzyklus wiederholt und auf diese Weise der Inhalt der in der HOT gespeicherten Daten während des Fortschreibezyklus dadurch fortgeschrieben, daß die älteste gespeicherte Zahl durch die neueste oder zuletzt im Zähler registrierte Zahl ersetzt wird. Dieser Austauschprozeß nimmt die ältesten Zahlendaten für die Druckhämmer, deren Betrieb vorhersagbar durch die Hammerfeuersteuerung beendet sein sollte aus der weiteren Vorhersage und Steuerung des Hammergrenzwertes heraus.

Während der Leseoperation wird ein EOS-Signal an die EOS-Steuerimpulsleitung 51 und das UND-Glied 48 zwischen dem Addierer 36 und dem Summenregister 49 angelegt. Alle Zähldaten der HOT vom Pufferspeicher 39 werden so sequentiell zu den vorhergehenden Datenpositionen der HOT im Addierer 36 addiert, bis eine EOS-Zwischensumme erstellt und im EOS-Summenregister 49 gespeichert ist. Danach wird die Vergleichsoperation wieder aufgenommen.

Am Ende des ersten Steuerintervalles enthält nur die erste Speicherstelle 192 Zähldaten, wenn angenommen wird, daß Vergleichssignale erzeugt und während des ersten Steuerintervalles gezählt wurden. Alle anderen Positionen sind Null und die im Register 49 gespeicherte Zwischensumme ist gleich der Zahl in der Position in der Position 192. Nach N Steuerintervallen entspricht jedoch die fortgeschriebene Summe im Register 49 der Summe von N Zahlen der HOT, die die Zwischensumme ist, die während des Vergleichszyklus an den B-Eingang des Addierers 36 angelegt wird, um laufend zu den aufeinanderfolgenden im Zähler 33 registrierten und durch das ODER-Glied 35 an den Eingang A angelegten Zahlen addiert zu werden. Wenn am Anfang einer Unterabtastung der Zähler auf Null gelöscht ist, wird auch eine Summe gleich der im Summenregister 49 gespeicherten Menge im HO-Register 52 gespeichert. Im nachfolgenden Vergleichszyklus speichert also der Addierer 36 für jede im Vergleichszähler 33 registrierte Vergleichssignalzahl eine neue Summe in das HO-Register 52. Da im Ausführungsbeispiel der Erfindung die Vergleichssignale vor dem Feuern den der Druckhämmer auftreten, ist die vom Addierer 36 gelieferte und im HO-Register 52 gespeicherte Summe im wesentlichen eine vorhergesagte Anzahl, basierend auf der Anzahl von Hämmern, die eingeschaltet werden sollten und im Laufe der Druckoperation eingeschaltet werden. Der Grenzwertvergleicher 53 kann also "voraussehen" und die Erzeugung weiterer Vergleichssignale verhindern, bevor Hämmer eingeschaltet werden, die die gewünschte Höchstzahl überschreiten.

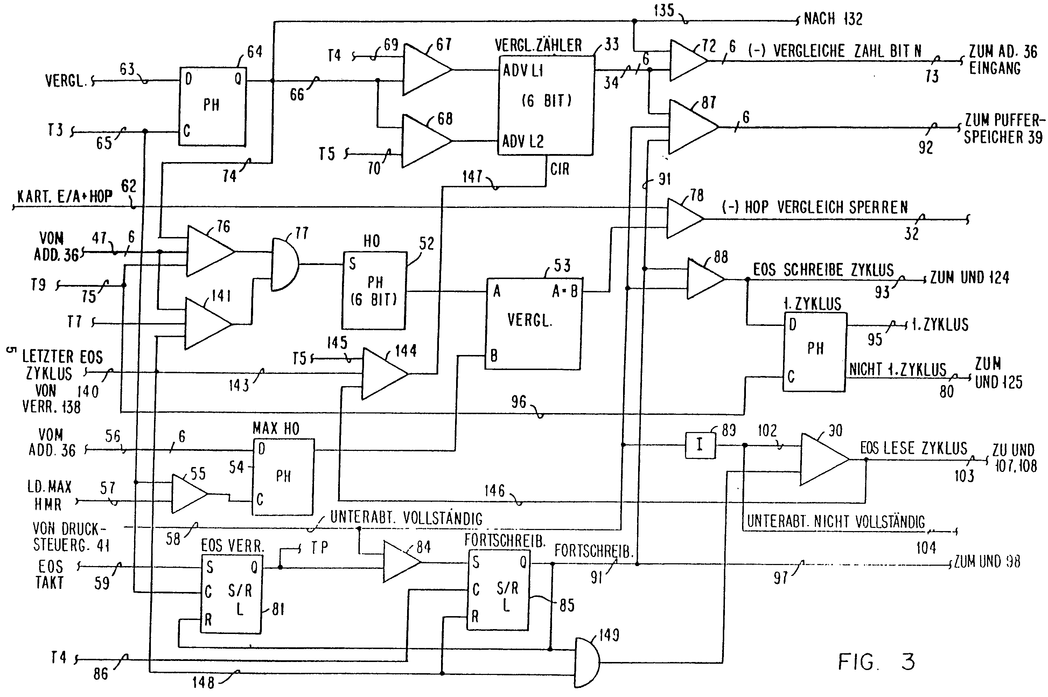

Die in Fig. 3 gezeigte Verriegelung 64 ist eine Polaritätshalterverriegelung, die aufgrund der Vergleichssignale auf der Leitung 63 einschaltet, wenn sie durch einen Taktimpuls T3 auf der Leitung 65 vorbereitet ist. Durch das Einschalten der Verriegelung 64 wird ein Zählervorschaltsignal auf die Leitung 66 gegeben und durch die beiden UND-Glieder 67 und 68 an die Verriegelungen ADVL1 und ADVL2 der Eingangsstufen des 6-bit großen Vergleicherzählers 33 geleitet durch die Taktimpulse T4 und T5 auf den Leitungen 69 bzw. 70. Das Zählervorschaltsignal dient als Leitsignal auf der Leitung 71 dazu, die im Vergleicherzähler 33 registrierte Zahl durch das UND-Glied 72 auf die Ausgangssammelleitung 34 und auf die Sammelleitung 73 zu leiten und an den A-Eingang des Addierers 36 zur Summierung mit den Daten an dessen B-Eingang (siehe Fig. 2) zu leiten. Durch das Zählervorschaltsignal wird weiterhin die vom Addierer 36 auf die Sammelleitung 47 gesetzte Summe durch das UND-Glied 76 und das ODER-Glied 77 an das HO Register 52 bei Einschaltung durch den Taktimpuls T9 auf der Leitung 75 geleitet. Der Grenzwertvergleicher 53 vergleicht den Inhalt des HO Registers 52 mit demjenigen des MAX HO-Hammer-an-Registers 54, das vorher mit den gewünschten Hammergrenzwertdaten geladen wurde; diese stammen von einer externen Quelle und werden geleitet über die Sammelleitung 55 und das UND-Glied 56 durch ein Ladebefehlssignal auf der Ladebefehlssignalleitung 57 zur Taktzeit T3 auf Leitung 65. Wenn die Dateneingänge bei A und B des Grenzwertvergleichers 53 gleich sind, wird ein Vergleichssperrsignal durch das UND-Glied 78 mittels eines HOP-Einschaltsignals auf der Leitung 62 über die Sperrsignalleitung 32 zur Druckersteuerung geleitet. Die Zeiteinteilung dieser Folge ist in Fig. 6 gezeigt, wo COMPACK zeigt, daß die Verriegelung 64 zur Zeit T3 des T-Zeitgebers eingeschaltet wird und eingeschaltet bleibt bis zur folgenden Zeit T3, dann für eine gleichlange Periode ausgeschaltet wird und bei der nächstfolgenden Zeit T3 wieder eingeschaltet wird. Dabei wird angenommen, daß bei jedem zweiten Konditionieren der Verriegelung 64, d. h. bei jeder zweiten Einschaltzeit T3 ein Vergleichssignal aufgetreten ist. Außerdem ist in Fig. 6 gezeigt, daß der Vergleicherzähler 33 zu den Zeiten T4, T5 vorgeschaltet wird, daß der Addierer 36 zu den Zeiten T6 bis T9 die Summierung vornimmt, daß das HO Register zur Zeit T9 fortgeschrieben wird und daß der Grenzwertvergleicher 53 einen Vergleichssperrimpuls zur Zeit T1 des nächsten Taktzyklus erzeugt. Der Vergleichssperrimpuls bleibt bestehen, bis die Menge im HO Register 52 in späteren Steuerintervallen unter die Zahl im HO-Maximalregister 54 reduziert ist.

Aus Fig. 6 ist zu ersehen, daß die Verriegelung 64 zu jeder zweiten Zeit T3 eingeschaltet wird und zeitlich so gesteuert ist, daß diese Einschaltung für ein Intervall erfolgt, in dem ein Hammer gewählt werden kann. Die Anzahl der Einschaltungen der Verriegelung 64 in einer Unterabtastung ist natürlich gleich der Anzahl der Hammerwahlen, die alle nach dem Erfindungsgedanken während der Unterabtastwahlzeit OT einer Unterabtastung erfolgen, wie aus Fig. 5 zu ersehen ist. Während der Totzeit DT der Unterabtastung wird kein Hammer gewählt.

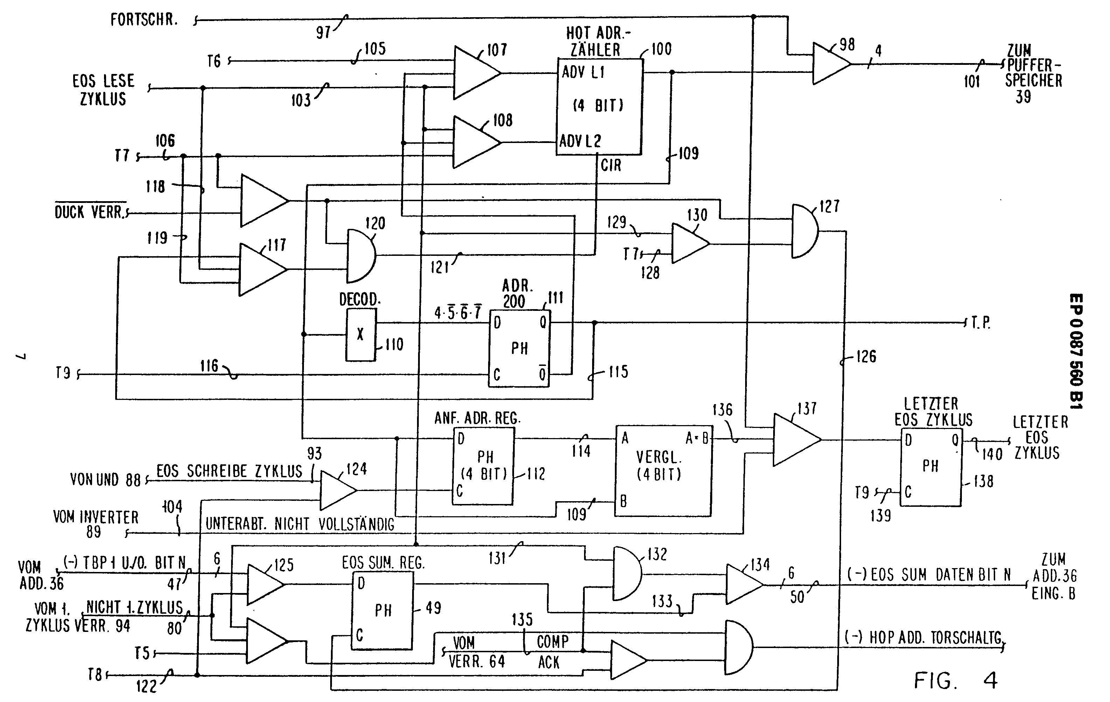

Der Fortschreibezyklus beginnt mit einem regulär auftretenden EOS-Taktimpuls von einem externen Taktgeber oder dergleichen (nicht dargestellt) auf der EOS-Taktleitung 59 zur EOS-Verriegelung 81, die durch den Taktimpuls T3 auf der Leitung 65 für einen vollen T-Taktzyklus eingeschaltet ist. Zu dieser Zeit wird ein SSC-Impuls auf der Leitung 58 von der Druckersteuerung 41 (siehe Fig. 2) durch das UND-Glied 84 von der EOS-Verriegelung 81 geleitet, um die Zyklusfortschreibeverriegelung 85 zu schalten, wenn diese durch einen Taktimpuls T4 auf der Leitung 86 eingeschaltet ist, um ein Fortschreibesignal auf den Leitungen 91 und 97 vorzusehen. Der SSC-Impuls auf Leitung 58 wird auch an die UND-Glieder 87 und 88 und an den Inverter 89 angelegt, der über die Invertersignalleitung 102 mit dem UND-Glied 90 verbunden ist. Im eingeschalteten Zustand gibt die Zyklusfortschreibeverriegelung 85 einen Zyklusfortschreibeimpuls auf die Leitung 91, um einmal

mit dem auf der Leitung 83 liegenden SSC-Impuls die Zahl auf der Sammelleitung 34 durch das UND-Glied 87 auf die Sammelleitung 92 zum Schreiben in die HOT des Pufferspeichers 39 zu leiten und zum anderen

über das UND-Glied 88 die Erzeugung eines EOS-Schreibimpulssignales auf der Leitung 93 vorzusehen oder alternativ eines ersten Zyklussignales auf der Leitung 95 durch Schalten der erste Zyklusverriegelung 94 bei Einschaltung durch den Impuls T9 auf der Leitung 96. Eingeschaltet erzeugt die Zyklusfortschreibeverriegelung 85 auch einen Zyklusfortschreibeimpuls auf der Leitung 97 (siehe Fig. 4) zum UND-Glied 98, um die Zahl auf der Sammelleitung 99 vom HOT-Adreßzähler 100 auf die Sammelleitung 101 zu leiten zur Adressierung der HOT des Pufferspeichers 39, um die Daten auf der Sammelleitung 92 in die entsprechende Speicherstelle der HOT zu setzen.

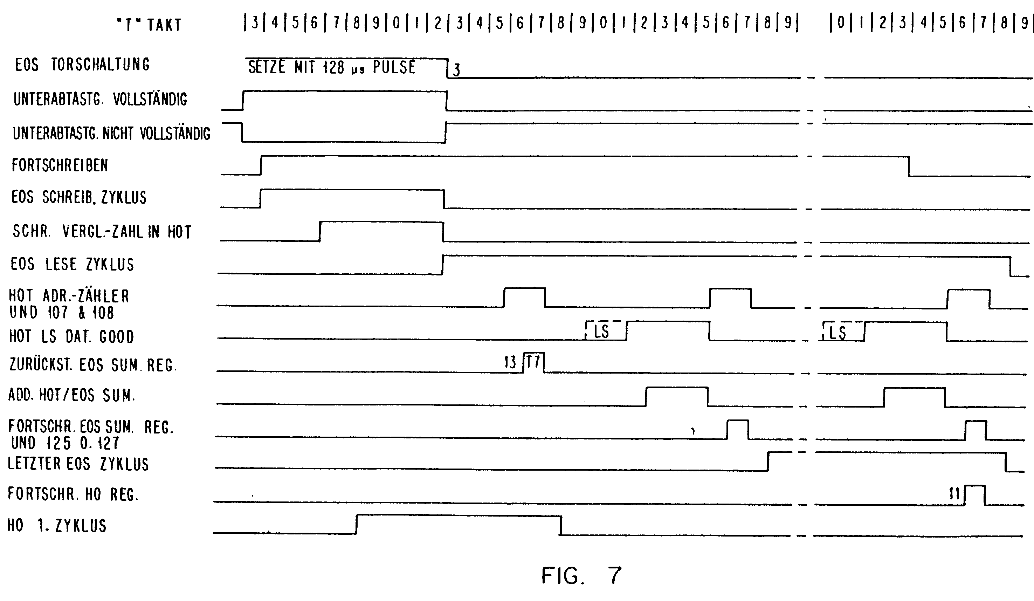

Wie aus den Fign. 3 und 7 hervorgeht, beginnt der Leseteil des Fortschreibezyklus mit dem zur Zeit T3 abfallenden SSC-Impuls auf der Leitung 83. Dadurch hebt der Inverter 89 das Signal auf der zum UND-Glied 90 führenden Leitung 102 an, wodurch ein EOS-Lesezyklusimpuls auf der Leitung 103 erzeugt wird, um den Leseteil des Fortschreibezyklus zu beginnen. Wenn das Signal auf der Leitung 83 angehoben wird, gibt der Inverter 89 auch ein negiertes SSC-Signal auf die Leitung 104.

Wie aus Fig. 4 zu ersehen ist, enthält die HOT-Adreßsteuerung einen HOT-Adreßzähler 100 mit einer an das UND-Glied 98 angeschlossenen Ausgangssammelleitung 99. Ein Fortschreibesignal von der Zyklusfortschreibeverriegelung 85 (siehe Fig. 3) leitet die in den HOT-Adreßzähler 100 gesetzten Adressen auf die Sammelleitung 101, um die N Speicherstellen der HOT des Pufferspeichers 39 zu adressieren. Die HOT wird wie oben beschrieben gelesen durch Vorschalten des Zählers 100 auf N Speicherstellen der HOT, beginnend und rückkehrend zu einer Anfangsadresse, die die nächste Adresse hinter dem Schreiben der Vergleichszahl in die HOT ist. Der Zähler 100 wird durch diesen Adreßzyklus um einen EOS-Lesezyklusimpuls auf der Leitung 103 vorgeschaltet, um die Taktsignale T6 und T7 (Das Fortschalten HOT-Adr.-Zähler, Fig. 7) auf den Leitungen 105 bzw. 106 durch die beiden UND-Glieder 107 und 108 an die Eingangsstufen ADVL1 und ADVL2 des Zählers 100 zu leiten. Der Ausgang des Zählers 100 ist auch über die Sammelleitung 109 und den Decodierer 110 mit einem HOT-Endadreßregister 111, einem Anfangsadreßregister 112 und dem B-Eingang des Vergleichers 113 verbunden, dessen A-Eingang über die Sammelleitung 114 an den Ausgang des Anfangsadreßregisters 112 angeschlossen ist.

Wenn der Decodierer 110 anzeigt, daß die Adresse der letzten Speicherposition der HOT im Pufferspeicher 39 steht, z. B. die Adresse 200; dann erzeugt das Endadreßregister 111 ein Rückstellsignal auf der Leitung 115 aufgrund eines Taktimpulses T9 auf der Leitung 116. Das Rückstellsignal auf der Leitung 115 wird durch das UND-Glied 117 vom EOS-Lesezyklusimpuls auf der Leitung 118 und einem Taktimpuls T7 auf der Leitung 119 durch das ODER-Glied 120 auf die Leitung 121 gegeben, um den HOT-Adreßzähler 100 zu löschen. Das Rückstellsignal auf der Leitung 121 löscht den HOT-Adreßzähler 100 auf die Adresse der ersten Speicherposition der HOT z. B. die Position 192.

Das Anfangsadreßregister 112 wird eingeschaltet durch die Kombination eines Taktimpulses T8 auf der Leitung 122 mit einem EOS-Schreibzyklusimpuls auf der Leitung 93 zum UND-Glied 124. Dadurch wird das Anfangsadreßregister 112 in die Lage versetzt, die Adresse zu speichern, die auf der Sammelleitung 109 steht und welche die Adresse zum Schreiben der im Vergleichszähler 33 registrierten Zahl darstellt.

Während des Auslesezyklus werden die ausgelesenen Daten an den A-Eingang des Addierers 36 gegeben. Die Daten von jeder Speicherstelle der HOT werden zu der im Summenregister 49 gespeicherten Menge addiert; die Summe wird an den B-Eingang angelegt. Die vom Addierer 36 erzeugte Summe wird dann während der Leseoperation in das Summenregister 49 zurückgespeichert. Fig. 4 zeigt, daß die Summe vom Addierer 36 auf die Sammelleitung 47 geleitet wird, von dort durch das UND-Glied 125, wenn ein Erstzyklus-Negationsimpuls auf der Leitung 80 von der Verriegelung 94 vorliegt. Die Summe auf der Sammelleitung 47 wird im EOS-Summenregister 49 gespeichert, wenn dies durch ein Signal auf der Leitung 126 vom ODER-Glied 127 aufgrund eines T7 Taktimpulses auf der Leitung 128 und eines EOS-Lesezyklusimpulses auf der Leitung 129 zum UND-Glied 130 dazu konditioniert ist. Ein EOS-Lesezyklusimpuls auf der Leitung 131 durch das ODER-Glied 132 leitet die im Register 49 stehende Summe über die Sammelleitung 133 durch das UND-Glied 134 zur Sammelleitung 50 und zum B-Eingang des Addierers 36. Außerdem ist anhand der Fig. 4 zu sehen, daß die Summe im Register 49 auf der Ausgangssammelleitung 133 durch das UND-Glied 134 zur Sammelleitung 50 kontinuierlich an den B-Eingang des Addierers 36 geleitet wird durch ein Vergleichersignal COMPACK auf der Leitung 135 durch das ODER-Glied 132 während des Vergleichszyklus.

Wie in Fig. 4 zu sehen ist, setzt der HOT-Adreßzähler 100 seine Fortschaltungen in jedem Zeitraum T6 - T7 fort und liefert Adressen auf die Sammelleitung 99. Die aus der HOT ausgelesenen Daten werden zur Zahl im Summenregister 49 (Addiere HOT/EOS Summe) addiert und die Summe im Summenregister 49 (fortschreiben EOS SUM. REG.) gespeichert, bis der Vergleicher 113 eine B-Eingangsadresse von der Sammelleitung 109 erkennt, die genauso groß ist wie die A-Eingangsadresse vom Anfangsadreßregister 112. Dann erzeugt der Vergleicher 113 ein Gleichheitssignal auf der Leitung 136, das durch das UND-Glied 137 von einem SSC-Negationssignal auf der Leitung 104 vom Inverter 89 und ein Fortschreibungssignal auf der Leitung 97 geschaltet wird. Dadurch wird die EOS-Schlußzyklusverriegelung 138 eingeschaltet, wenn der Taktimpuls T9 auf der Leitung 39 liegt, und es wird ein EOS-Schlußzyklussignal (letzter EOS-Zyklus) auf der Leitung 140 erzeugt.

Nach Darstellung in Fig. 3 wird der EOS-Schlußzyklusimpuls auf der Leitung 140

1.  an das UND-Glied 141 angelegt, zusammen mit einem Taktimpuls T7 auf der Leitung 142 und der Summe vom Addierer 36 auf der Leitung 47, um diese Summe durch das ODER-Glied 77 zu leiten, um das Hammer-an-Register 52 für den Anfang des Vergleichszyklus fortzuschreiben;

2.  an die Leitung 143 zum UND-Glied 144 angelegt, zusammen mit dem Taktimpuls T5 auf der Leitung 145 und einem EOS-Lesezyklusimpuls auf der Leitung 146, um mit einem Löschsignal auf Leitung 147 den Vergleicherzähler 33 zu löschen;

3.  an die Leitung 148 angelegt, um die Fortschreibungsverriegelung 85 zur Zeit T4 zurückzustellen. Der EOS-Schlußzyklusimpuls auf der Leitung 148 wird ebenfalls über das ODER-Glied 149 an das UND-Glied 90 angelegt, um den EOS-Lesezyklusimpuls auf der Leitung 103 für die letzte Leseoperation zu halten. Nach der letzten Leseoperation wird der Adreßzähler 100 noch einmal auf die nächste Adreßposition vorgeschaltet, auf der die im Vergleichszähler 33 registrierte Zahl im nachfolgenden Vergleichszyklus in die HOT geschrieben wird.

Zusammengefaßt kann gesagt werden:

Die Druckersteuerung zur Begrenzung der Anzahl der während eines vorbestimmten Zeitintervalls gleichzeitig erregten Druckhämmer weist einen Vergleichszähler zum Zählen der Anzahl der Druckhämmer auf, die während der Abtastungen (Scans) ausgewählt werden, welche innerhalb des Zeitintervalls liegen.

Der Zählerstand für jede Abtastung (Scan) wird in einer Tabelle gespeichert, die fortlaufend nach jeder Abtastung dekrementiert wird.

Am Ende jeder Abtastung wird der Inhalt der Tabelle aufsummiert und in einem Summenregister gespeichert.

Der Inhalt des Summenregisters wird nach dem Auftreten eines Vergleiches zum Ausgangswert des Vergleichszählers addiert; die sich ergebende Summe wird in einem Hammer-an-Register gespeichert. Der Inhalt dieses Registers wird als Wert für die einzuschaltenden und abzuschaltenden Hämmer nach verschiedenen individuellen Hammer-Verzögerungsintervall während des Steuerzeitintervalles verglichen mit dem Zählerstand eines Registers, welches die maximal zulässige Anzahl einzuschaltender Hämmer enthält. Ein Vergleicher erzeugt ein Signal, welches die Erzeugung von Hammerauswahlsignalen für den Vergleicherzähler sperrt, wenn das Hammer-an-Register und das Register mit dem Maximalwert den gleichen Inhalt haben.

Die Erfindung gestattet die Steuerung einer maximalen Anzahl von eingeschalteten Hämmern während eines spezifischen Zeitintervalles ohne aktuelles Zählen der ein- und ausgeschalteten Hämmer, wobei die Ein- und Ausschaltungen für verschiedene Hämmer unterschiedlich sein können wegen der unterschiedlichen Verzögerungswerte, die zur Kompensation von Flugzeitschwankungen der einzelnen Hämmer zu berücksichtigen sind.

Die Anzahl der Abtastungen (Scans),
die Zeitgabe der Abtast-Zähl-Intervalle,
die Maximalzahl der Hämmer, die an sein können,
und
das Fortschreiben der Zählwerte
sind programmierbar, um mit verschiedenen Druckgeschwindigkeiten arbeiten zu können.

**Patentansprüche**

1. Steuerung zur Begrenzung der Anzahl gleichzeitig zu betätigender Druckhämmer (im folgenden Begrenzungssteuerung genannt) eines Zeilendruckers zur Aufzeichnung von Daten an mehreren Druckpositionen einer Druckzeile, der einen umlaufenden Typenträger aufweist, dessen Typen auf die Druckpositionen der Druckzeile in zyklischer Folge in aufeinanderfolgenden jeweils Steuerintervalle umfassenden Druckintervallen eines Druckzeilenzyklus ausgerichtet werden,

wobei die Begrenzungssteuerung (28) eine erste Einrichtung (33) aufweist zur Angabe der Anzahl der in einem aktuellen Steuerintervall ausgewählten Hämmer,

dadurch gekennzeichnet,

daß jedes Steuerintervall ein Bruchteil der Flugzeit eines Hammers ist,

und daß die Begrenzungssteuerung eine zweite Einrichtung (39) aufweist zur Angabe der Anzahl der in mehreren, dem aktuellen Steuerintervall vorausgegangenen Steuerintervallen ausgewählten Druckhämmer,

wobei die Erregung für bereits betätigte Druckhämmer zumindest teilweise noch andauert,

daß die Begrenzungssteuerung eine die erste (33) und zweite (39) Einrichtung verknüpfende Einrichtung (52) zur Ermittlung der Gesamtzahl von ausgewählten Druckhämmern und

eine auf diese Einrichtung (52) ansprechende Einrichtung (53) aufweist,

die die Auswahl weiterer Druckhämmer im aktuellen Steuerintervall während der Druckoperation verhindert, wenn die ermittelte Gesamtzahl von Druckhämmern einen vorgegebenen Maximalwert erreicht,

und daß die Begrenzungssteuerung während des Druckvorganges im aktuellen Steuerintervall wirksam ist unter Berücksichtigung noch anhaltender Erregungen von in vorausgegangenen Steuerintervallen betätigten Druckhämmern und von im aktuellen Steuerintervall zu betätigenden Druckhämmern.

2. Steuerung nach Anspruch 1,
dadurch gekennzeichnet,
daß ein Addierer (36) vorgesehen ist zur Addition jedes laufenden von der ersten (33) einen Zähler darstellenden Einrichtung für den während des Steuerintervalles registrierten Zählstandes zu den in der zweiten (39) einen Speicher darstellenden Einrichtung gespeicherten Zählwerten.

3. Steuerung nach Anspruch 2,
dadurch gekennzeichnet,
daß sie für die Gesamtzahl einzuschaltender Druckhämmer weitere Einrichtungen aufweist, um den Addierer (36) zur Erzeugung einer Zwischensumme durch Addition der im Speicher (39) gespeicherten Zahlen zu veranlassen und um diese Zwischensumme zu speichern,

und daß Einrichtungen vorgesehen sind, die während des Steuerintervalles bewirken, daß die vom Zähler (33) gelieferten Signale im Addierer (36) zu dieser Zwischenzumme addiert werden zur Erzeugung der genannten Gesamtzahl.

4. Steuerung nach Anspruch 2,
dadurch gekennzeichnet,
daß sie ein erstes Register (52) zum Speichern der vom Addierer (36) erzeugten Gesamtsumme,

ein zweites Register (54) zum Speichern der Höchstzahl und

einen mit diesem ersten und zweiten Register verbundenen Vergleicher (53) aufweist, der an seinem Ausgangsanschluß ein Steuersignal an den Zähler (33) liefert, um die weitere Auswahl von Druckhämmern zu verhindern, wenn die Gesamtsumme in dem genannten ersten Register (52) genauso groß ist wie die Höchstzahl in dem genannten zweiten Register (54).

5. Steuerung nach Anspruch 2,
dadurch gekennzeichnet,
daß eine Fortschreibeeinrichtung vorgesehen ist zur periodischen Fortschreibung der im Speicher (39) gespeicherten Vergleichssignalzahlen durch Einschluß der im Zähler (33) registrierten Vergleichssignalzahl am Ende eines jeden Steuerintervalles.

6. Steuerung nach Anspruch 5,
dadurch gekennzeichnet,
daß die Vergleichssignalzahlen in Speicher (39) dadurch fortgeschrieben werden, daß eine vorbestimmte Zahl aus der Anzahl der Vergleichssignalzahlen ausgeschlossen wird, wenn diese Anzahl von Vergleichssignalzahlen eine vorbestimmte Menge erreicht.

7. Steuerung nach Anspruch 3,
dadurch gekennzeichnet,
daß sie eine Fortschreibeeinrichtung aufweist zur periodischen Fortschreibung der im Speicher (39) gespeicherten Vergleichssignalzahlen durch Einschluß der im Zähler (33) am Ende eines jeden Steuerintervalles registrierten Vergleichssignalzahl sowie

Einrichtungen zur Lieferung der fortgeschriebenen Vergleichssignalzahlen aus dem Speicher (39) an den Addierer (36), um eine fortgschriebenen Zwischensumme zur Speicherung im Zwischensummenspeicher (49) zu erzeugen.

8. Steuerung nach Anspruch 7,
dadurch gekennzeichnet,
daß der Speicher (39) ein Lese/Schreibspeicher mit mehreren Speicherstellen ist,

daß die Fortschreibeeinrichtung eine Speicher-Lese/ Schreibsteuerung einschließt mit einer den Speicher (39) mit dem Zähler (33) und dem Addierer (36) verbindenden Schaltung und

daß eine Fortschreibezyklussteuerung vorgesehen ist, um die genannte Speicher-Lese/Schreibsteuerung in einer

ersten Betriebsart so zu betätigen, daß die in dem Zähler (33) registrierte Vergleichszahl in eine der genannten Speicherstellen des Speichers geschrieben wird und in einer

zweiten Betriebsart so zu betätigen, daß die Speicherstellen in dem Speicher (39) sequentiell gelesen und die dort befindlichen Vergleichszahlendaten an den Addierer (36) zur Erzeugung der Zwischensumme gegeben werden.

9. Steuerung nach Anspruch 8,
dadurch gekennzeichnet,
daß die Fortschreibeeinrichtung eine Steuerintervall-Zeitgebung umfaßt zur periodischen Lieferung von Steuerintervall-Zeitgebersignalen an die Fortschreibezyklussteuerung, die daraufhin die Speicher-Lese/Schreibsteuerung in die erste und zweite Betriebsart versetzt, und daß die Dauer des Steuerintervall-Zeitgebersignales eine Funktion der effektiven Flugzeit der Druckhämmer ist.

10. Steuerung nach Anspruch 9,
dadurch gekennzeichnet,
daß eine Zeitgabe für die Unterabtastung zur Erzeugung von Unterabtastsignalen entsprechend den Druckintervallen des Druckzeilenzyklus vorgesehen ist und die Fortschreibezyklussteuerung Schalteinrichtungen enthält, die auf die Kombination der Unterabtast- und Steuerintervall-Zeitgeber-Signale anspricht zur Steuerung des Betriebes der Speicher-Lese/Schreibsteuerung in der ersten und zweiten Betriebsart.

11. Steuerung nach Anspruch 10,
dadurch gekennzeichnet,
daß die Unterabtastsignale Unterabtastintervalle mit jeweils einer Unterabtastwahlzeit und einer anschließenden Unterabtasttotzeit definieren, in der ein Hammer gewählt wird,
und daß die auf die Unterabtast- und Steuerintervall-Zeitgeber-Signale ansprechenden Schalteinrichtungen während der Unterabtasttotzeit so betätigt werden können, sie den Betrieb der Speicher-Lese/Schreibsteuerung in der ersten und zweiten Betriebsart steuern.

12. Steuerung nach Anspruch 11,
dadurch gekennzeichnet,
daß auf die Unterabtastsignale ansprechende Einrichtungen zur Erzeugung von Unterabtastabschlußsignalen zur Anzeige des Endes der Unterabtastwahlzeit und des Anfanges der Unterabtasttotzeit vorgesehen sind, und daß die Schalteinrichtungen auf das Unterabtastabschlußsignal in Kombination mit dem Steuerintervall-Zeitgebersignal ansprechen, um den Betrieb der Speicher-Lese/Schreibsteuerung in der ersten und zweiten Betriebsart während der Unterabtasttotzeit zu steuern.

13. Steuerung nach Anspruch 12,
dadurch gekennzeichnet,
daß die Schalteinrichtung Verriegelungen einschließen zur Lieferung eines Fortschreibesignales an die Lese/Schreibsteuerung, aufgrund des Steuerintervall-Zeitgebersignales in Kombination mit

a)     dem Unterabtastabschlußsignal zur Betätigung in der ersten Betriebsart und
b)     einem negierten Unterabtastabschlußsignal zur Betätigung in der zweiten Betriebsart.

14. Steuerung nach Anspruch 13,
dadurch gekennzeichnet,
daß der Speicher (39) eine Hammereinschalttabelle mit N Speicherstellen speichert, die die Anzahl der während N Steuerintervallen eingeschalteten Hämmer angibt, daß die Fortschreibezyklussteuerung zur Betätigung der Speicher-Lese/Schreibsteuerung in der ersten und zweiten Betriebsart eine durch das Fortschreibesignal von der Verriegelung und das Unterabtastabschlußsignal in der ersten Betriebsart betätigbare Adressiereinrichtung zur Adressierung einer Anfangsspeicherstelle I der Tabelle enthält sowie Einrichtungen, die aufgrund des negierten Unterabtastabschlußsignales und des Fortschreibesignales in der zweiten Betriebsart derart betätigt werden, daß die Adressiereinrichtung N Speicherstellen der Tabelle nacheinander adressiert, wobei die Adressiereinrichtung in der zweiten Betriebsart so betätigt wird, daß jedes Steuerintervall mit der Speicherstelle I +1 beginnt und endet.

## Claims

1. Control system for limiting the number of print hammers to be turned on simultaneously (hereinafter referred to as limit control) in a line printer for recording data at a plurality of print positions of a print line,
said printer comprising a moving type carrier for cyclically presenting type characters at the print positions of the print line in sequential print intervals, including control intervals, of a print line cycle,
wherein the limit control (28) comprises first means (33) for indicating the number of hammers being selected in a given control interval,
characterized in that
the duration of each control interval is a fraction of the hammer flight time, and
the limit control comprises a second means (39) for indicating the number of hammers selected in a plurality of control-intervals preceding said given control interval,
wherein the energization of previously turned on print hammers continues at least partly,
the limit control comprises means (52) linking said first (33) and said second (39) means for predicting the total number of print hammers selected, and
means (53) responsive to said means (52),
which prevents further selection of said print hammers in said given control interval during printing when the detected total number of print hammers equals a predetermined maximum number,
and that the limit control is active during printing in a given control interval, taking account of the energization of print hammers turned on in preceding control intervals and of print hammers to be turned on in said given control interval.

2. Control according to claim 1,
characterized by the provision of adder means (36) for adding each running count registered by said first means (33), constituting a counter, during said control interval to counts stored in said second means (39) constituting storage means.

3. Control according to claim 2,
characterized in that it comprises further means for the total number of print hammers to be turned on, said means causing said adder means (36) to produce a subtotal sum by adding the counts stored in said storage means (39), and means storing said subtotal sum, and

that means is provided which during said control interval causes the signals supplied by said counter means (33) to be added in said adder means (36) to said subtotal sum to produce said total sum.

4. Control according to claim 2, characterized in that it comprises a first register (52) for storing said total sum produced by said adder means (36),

a second register (54) for storing the maximum number, and

a comparator (53), connected to said first and second registers, having an output connection for supplying a control signal to said counter means (33) for preventing further selection of said print hammers when said total sum in said first register (52) equals said maximum number in said second register (54).

5. Control according to claim 2, characterized in that updating means is provided for periodically updating the compare signal counts stored in said storage means (39) by including at the end of each control interval the compare signal count registered in said counter means (33).

6. Control according to claim 5, characterized in that the compare signal counts in said storage means (39) are updated by excluding a predetermined one of said compare signal counts when said plurality of compare signal counts equals a predetermined quantity.

7. Control according to claim 3, characterized in that it comprises updating means for periodically updating said plurality of compare signal counts stored in said storage means (39) by including the compare signal count registered in said counter means (33) at the end of said given control interval, as well as

means for supplying said updated plurality of compare signal counts from said storage means (39) to said adder means (36) for producing an updated subtotal sum for storage in said subtotal storage means (49).

8. Control according to claim 7, characterized in that said storage means (39) is a read/write storage means having a plurality of storage locations,

that said updating means includes storage read/write control means including circuit means interconnecting said storage means (39) and said counter means (33) and said adder means (36),

that update cycle control means is provided for operating said storage read/write control means in a first mode for writing said compare count registered in said counter means (33) into one of said storage locations of said storage means and in a second mode for sequentially reading said plurality of said storage locations in said storage means (39) for application of compare count data therein to said adder means (36) for producing said subtotal sum.

9. Control according to claim 8, characterized in that said updating means includes control interval timing means for periodically supplying control interval timing signals to said update cycle control means whereby said update cycle control means operates said storage read/write control means in said first and second modes, said control interval timing signal having a time period which is a function of the effective flight time of said print hammers.

10. Control according to claim 9, characterized in that subscan timing means is provided for producing subscan signals in accordance with said print intervals of said print line cycle, and said update cycle control means comprises switch means responsive to the combination of said subscan and said control interval timing signals for controlling the operation of said storage read/write control means in said first and second modes.

11. Control according to claim 10, characterized in that said subscan signals produced by said subscanning means defines subscan intervals each having a subscan option time followed by a subscan dead time during which a hammer is selected,

and that said switch means responsive to said subscan and said control interval timing signals is operable during said subscan dead time for controlling the operation of said storage read /write control in said first and second modes.

12. Control according to claim 11, characterized in that means responsive to said subscan signals is provided for generating subscan complete signals for indicating the end of said subscan option time and the beginning of said subscan dead time, and that said switch means is responsive to said subscan complete signal in combination with said control interval timing signal for controlling the operation of said storage read/write control means in said first and second modes during said subscan dead time.

13. Control according to claim 12, characterized in that said switch means comprises latch means for supplying an update signal to said read/write storage control means in response to said control interval timing signal in combination with

a) said subscan complete signal for operation in said first mode and

b) a Not subscan complete signal for operation in said second mode.

14. Control according to claim 13, characterized in that said storage means (39) stores a hammer on table having N storage locations, said hammer on table indicating the number of hammers turned on during N control intervals, that said update cycle control means for operating said storage read/write control in said first and second modes includes address means operable in response to said update signal from said latch means and said subscan complete signal in said first mode for addressing an initial storage location I of said table, and means operable in response to said Not subscan complete signal and said update signal in said second mode for operating said addressing means to address said N storage locations of said table in sequence, said addressing means being operable in said second mode beginning and ending each control interval with storage location I + 1.

## Revendications

1. Commande pour limiter le nombre de marteaux d'impression à actionner simultanément (appelée commande de limitation dans la suite) d'une imprimante ligne par ligne pour afficher des données en plusieurs positions d'impression d'une ligne d'impression,

qui comporte un support de caractères circulant dont les caractères sont alignés sur les positions d'impression de la ligne d'impression en séquence cyclique dans des intervalles d'impression successifs d'un cycle de ligne d'impression comprenant chacun des intervalles de commande, la commande de limitation (28) comportant un premier dispositif (33) pour indiquer le nombre des marteaux sélectionnés au cours d'un intervalle de commande actuel,

caractérisée en ce que chaque intervalle de commande est une fraction de la durée d'activation d'un marteau, et en ce que la commande de limitation comporte un second dispositif (39) pour indiquer le nombre des marteaux d'impression sélectionnés au cours de plusieurs intervalles de commande précédant l'intervalle de commande actuel, l'excitation pour des marteaux d'impression déjà actionnés persistant encore au moins partiellement, en ce que la commande de limitation comporte un dispositif (52) combinant le premier dispositif (33) et le second dispositif (39) pour déterminer le nombre total de marteaux d'impression sélectionnés et un dispositif (53) réagissant à ce dispositif (52) qui empêche la sélection d'autres marteaux d'impression dans l'intervalle de commande actuel pendant l'opération d'impression, lorsque le nombre total de marteaux d'impression déterminé atteint une valeur maximale prédéterminée, et en ce que la commande de limitation est active pendant le processus d'impression dans l'intervalle de commande actuel en tenant compte d'excitation persistant encore de marteaux d'impression actionnés au cours d'intervalles de commande précédents et de marteaux d'impression à actionner au cours de l'intervalle de commande actuel.

2. Commande selon la revendication 1, caractérisée en ce qu'un additionneur (36) est prévu pour l'addition de chaque position de comptage courante enregistrée par le premier (33) dispositif représentant un compteur pour la position de comptage enregistrée pendant l'intervalle de commande aux valeurs de comptage mémorisées dans le second (39) dispositif constituant une mémoire.

3. Commande selon la revendication 2, caractérisée en ce qu'elle comporte pour le nombre total de marteaux d'impression à déclencher d'autres dispositifs pour faire produire à l'additionneur (36) une somme intermédiaire par addition des nombres mémorisés dans la mémoire (39) et pour mémoriser cette somme intermédiaire, et en ce que l'on prévoit des dispositifs qui ont pour effet, pendant l'intervalle de commande, que les signaux fournis par le compteur (33) à l'additionneur (36) sont additionnés à cette somme intermédiaire pour produire ledit nombre total.

4. Commande selon la revendication 2, caractérisée en ce qu'elle comporte un premier registre (52) pour mémoriser la somme totale produite par l'additionneur (36), un second registre (54) pour mémoriser le nombre maximum et un comparateur (53) relié à ses premier et second registres, qui fournit à sa borne de sortie un signal de commande au compteur (33) pour empêcher la poursuite de la sélection de marteaux d'impression lorsque la somme totale se trouvant dans ledit premier registre (52) est exactement égale au nombre maximum contenu dans ledit second registre (54).

5. Commande selon la revendication 2, caractérisée en ce qu'on prévoit un dispositif de mise à jour pour la mise à jour périodique des nombres de signaux de comparaison mémorisés dans la mémoire (39) par inclusion du nombre de signaux de comparaison enregistré dans le compteur (33) à la fin de chaque intervalle de commande.

6. Commande selon la revendication 5, caractérisée en ce que les nombres de signaux de comparaison dans la mémoire (39) sont mis à jour du fait qu'un nombre prédéterminé est exclu de la multiplicité de nombres de signaux de comparaison, lorsque cette multiplicité de nombres de signaux de comparaison atteint une quantité prédéterminée.

7. Commande selon la revendication 3, caractérisée en ce qu'elle comporte un dispositif de mise à jour pour la mise à jour périodique des nombres de signaux de comparaison mémorisés dans la mémoire (39) par inclusion du nombre de signaux de comparaison enregistré dans le compteur (33) à la fin de chaque intervalle de commande, ainsi que des dispositifs pour transmettre les nombres de signaux de comparaison mis à jour de la mémoire (39) à l'additionneur (36) pour produire une somme intermédiaire mise à jour à mémoriser dans la mémoire de sommes intermédiaires (49).

8. Commande selon la revendication 7, caractérisée en ce que la mémoire (39) est une mémoire de lecture/écriture ou mémoire vive à plusieurs emplacements de mémoire, en ce que le dispositif de mise à jour comprend une commande de lecture/écriture de mémoire avec un montage reliant la mémoire (39) au compteur (33) et à l'additionneur (36), et en ce qu'on prévoit une commande de cycle de mise à jour, pour produire la commande de lecture/écriture de mémoire indiquée dans un premier mode de fonctionnement, de façon que le nombre de comparaison enregistré dans le compteur (33) soit introduit dans l'un des emplacements de mémoire cités de la mémoire, et dans un second mode de fonctionnement, de façon que les emplacements de mémoire de la mémoire (39) soient lus séquentiellement et que les données de nombres de comparaison qui s'y trouvent soient transmis à l'additionneur (36) pour produire la somme intermédiaire.

9. Commande selon la revendication 8, caractérisée en ce que le dispositif de mise à jour comprend un rythmeur d'intervalles de commande pour fournir périodiquement des signaux de rythme d'intervalles de commande à la commande de cycles de mise à jour, qui fait alors passer la commande de lecture/écrite de mémoire dans le premier mode de fonctionnement et le second, et en ce que la durée du signal de rythme d'intervalles de commande est fonction de la durée d'activation effective des marteaux d'impression.

10. Commande selon la revendication 9, caractérisée en ce qu'on prévoit un rythme pour le sous-balayage pour la production de signaux de sous-balayage selon les intervalles d'impression du cycle de ligne d'impression et la commande de cycles de mise à jour comprend des dispositifs de commutation réagissant à la combinaison des signaux de sous-balayage et de rythme d'intervalles de commande pour commander le fonctionnement de la commande de lecture /écriture de mémoire dans le premier ou le second mode de fonctionnement.

11. Commande selon la revendication 10, caractérisée en ce que les signaux de sous-balayage définissent des intervalles de sous-balayage avec chacun un temps de sous-balayage et un temps mort de sous-balayage subséquent au cours duquel un marteau est sélectionné, et en ce que les dispositifs de commutation réagissant aux signaux de sous-balayage et de rythme d'intervalles de commande sont actionnés pendant le temps mort de sous-balayage de telle façon qu'ils commandent le fonctionnement de la commande de lecture /écriture de mémoire dans le premier mode de fonctionnement et le second.

12. Commande selon la revendication 11, caractérisée en ce que l'on prévoit des dispositifs réagissant aux signaux de sous-balayage pour produire des signaux de fin de sous-balayage pour indiquer la fin du temps de sélection de sous-balayage et le début du temps mort de sous-balayage, et en ce que les dispositifs de commutation réagissent au signal de fin de sous-balayage en combinaison avec le signal de rythme d'intervalles de commande pour commander le fonctionnement de la commande de lecture /écriture de mémoire dans le premier et le second modes de fonctionnement pendant le temps mort de sous-balayage.

13. Commande selon la revendication 12, caractérisée en ce que les dispositifs de commutation comprennent des verrouillages pour fournir un signal de mise à jour à la commande de lecture/écriture, sur la base du signal de rythme d'intervalles de commande en combinaison avec

a) le signal de fin de sous-balayage pour l'activation dans le premier mode de fonctionnement, et
b) un signal de fin de sous-balayage nié pour l'activation dans le second mode de fonctionnement.

14. Commande selon la revendication 13, caractérisée en ce que la mémoire (39) mémorise une table de déclenchement de marteaux à N emplacements de mémoire, qui indique le nombre des marteaux déclenchés pendant N intervalles de commande, en ce que la commande de cycles de mise à jour pour l'actionnement de la commande de lecture/écriture de mémoire dans les premier et second modes de fonctionnement comprend un dispositif d'adressage pouvant être activé par le signal de mise à jour du verrouillage et le signal de fin de sous-balayage dans le premier mode de fonctionnement pour l'adressage d'un emplacement de mémoire initial I de la table, ainsi que des dispositifs qui, sur la base du signal de fin de sous-balayage nié et du signal de mise à jour, sont activés dans le second mode de fonctionnement de telle façon que le dispositif d'adressage adresse N emplacements de mémoire de la table successivement, le dispositif d'adressage étant activé dans le second mode de fonctionnement de telle façon que chaque intervalle de commande commence et s'achève par l'emplacement de mémoire I +1.

FIG. 1

FIG. 2

FIG. 3

FIG. 4

EP 0 087 560 B1

"T" TAKT  |0|1|2|3|4|5|6|7|8|9|0|1|2|3|4|5|6|7|8|9|0|1|2|3|4|5|6|7|8|9|0|1|2|3|4|5|6|7|8|9|

COMP. ACK     #1     #2

VERGL. ZÄHLER VORSCH.    1    2

ADD. ZUR EOS SUMME   (EOS SUM.=14)   15   16

HO-REG. FORTSCHREIBEN   15   16

VERGL. SPERREN

**FIG. 6**

UNTERABTASTUNGEN   OT   78   OT

EOS TAKT PULSE   TO   TO

EOS VERRIEGELUNG   3   5

FORTSCHREIBE-VERRIEGELG.   4

**FIG. 5**

FIG. 7